# EUROPÄISCHE PATENTSCHRIFT

(11) **EP 1 085 065 B1**
(45) Veröffentlichungstag und Bekanntmachung des Hinweises auf die Patenterteilung: **08.06.2005**
(21) Anmeldenummer: 00118249.2
(22) Anmeldetag: 04.09.2000
(51) Int. Cl.: C09D 175/16, C08G 18/67, C08G 18/79, C08G 18/81, C08G 18/72

(54) **Elastisches Beschichtungssystem enthaltend UV-härtbare, Isocyanatgruppen aufweisende Urethan(meth)acrylate und seine Verwendung**
Elastic coating system containing UV-curable urethane(meth)acrylates with isocyanate groups and its use
Système de revêtement élastique contenant des uréthane-(meth)acrylates à groupes isocyanate et réticulables par les UV et son utilisation

(30) Priorität: 15.09.1999 DE 19944156
(43) Veröffentlichungstag der Anmeldung: 21.03.2001
(73) Patentinhaber: Bayer MaterialScience AG, 51368 Leverkusen (DE)
(72) Erfinder: Weikard, Jan, Dr., 50760 Köln (DE); Fischer, Wolfgang, Dr., 40668 Meerbusch (DE); Kobusch, Claus, Dr., 40667 Meerbusch (DE); Küttner, Wolfram, 51467 Bergisch Gladbach (DE)

(56) Entgegenhaltungen:
- EP-A- 0 928 800
- US-A- 3 664 861
- US-A- 5 719 227

## Beschreibung

Die Erfindung betrifft ein elastisches Beschichtungssystem, bei dem durch UV-Härtung von (Meth)Acryloylgruppen enthaltenden Bestandteilen trockene, handhabbare Oberflächen entstehen und danach durch Vernetzung von NCO-Gruppen enthaltenden Bestandteilen mit aktiven Wasserstoff enthaltenden Bestandteilen die gewünschten Eigenschaften erzeugt werden und seine Verwendung zum Beschichten unter anderem von Kunststoffteilen.

Die DE-A-19 800 528 beschreibt Beschichtungssysteme bestehend aus:
a) einem Urethan(meth)acrylat, das (Meth)Acryloylgruppen und freie Isocyanatgruppen aufweist,
b) gegebenenfalls einem weiteren Polyisocyanat,
c) einem, die radikalische Polymerisation initiierenden UV-Initiator,
d) einer oder mehreren mit Isocyanaten reaktiven Verbindung.

Weiterhin wird in der DE-A-19 800 528 ein Verfahren beansprucht, das dadurch gekennzeichnet ist, dass durch UV-initiierte radikalische Polymerisation handhabbare Oberflächen und durch darauf folgende NCO-Reaktion die Endeigenschaften entstehen.

Wird nach diesem Verfahren das oben beschriebene Beschichtungssystem auf eine flexible Kunststoffplatte aufgebracht, so zeigen die resultierenden Lackfilme zwar eine sehr gute Optik, Härte und Beständigkeit gegen Lösemittel und Chemikalien, jedoch sind die Filme für eine Anwendung auf flexiblem Kunststoff nicht elastisch genug: Biegt man die Kunststoffplatte bei Raumtemperatur um bis zu 180°, so reißt der Lack (Test der Biegeelastizität).

Demnach war es Aufgabe der vorliegenden Erfindung, ein Beschichtungssystem bereitzustellen, dass bei Anwendung des in der DE-A-19 800 528 beschriebenen Verfahrens elastische Beschichtungen ergibt, die den Biegetest auch bei Temperaturen von -10°C und tiefer bestehen.

Es wurde gefunden, dass der Einbau von bestimmten Polyesterdiolen in Komponente a) eines Beschichtungssystems nach der DE-A-19 800 528 sehr elastische Beschichtungen ergibt.

Gegenstand der Erfindung sind Beschichtungssysteme aus:
a) einem Urethan(meth)acrylat, das (Meth) Acryloylgruppen und freie Isocyanatgruppen aufweist,
b) gegebenenfalls einem weiteren Polyisocyanat,
c) einem, die radikalische Polymerisation initiierenden UV-Initiator,
d) einer oder mehreren mit Isocyanaten reaktiven Verbindung,
dadurch gekennzeichnet, dass das Urethan(meth)acrylat ein Estergruppen aufweisendes Diol mit einem mittleren Molekulargewicht von 176 bis 2000 in einer Menge von 1 bis 65 Gew.-%, bezogen auf die Menge an anderen Bestandteilen des Urethan(meth)acrylat, als Bestandteil enthält.

Vorzugsweise wird das vorliegende Beschichtungssystem in zwei Komponenten hergestellt, wobei die Komponente I vorzugsweise die Bestandteile a) und b) enthält, die Komponente II die Bestandteile c) und d).

Zur Erzielung von Wetterstabilität kann der Komponente II zugegeben werden:
e) ein UV-Absorber mit einem Absorptionsbereich bis max. 390 nm und
f) ein HALS-Stabilisator;
weiterhin:
g) übliche Lackadditive wie Verlaufs- oder Entlüftungsmittel,
h) Katalysatoren zur Beschleunigung der NCO-Reaktion.

Komponente I und II können zur Verdünnung jeweils ein im Sinne der Vernetzung inertes Lösungsmittel enthalten.

Komponente I und Komponente II werden so kombiniert, dass ein Verhältnis zwischen den NCO-Gruppen und mit NCO-reaktiven Gruppen von 2:1 bis 0,8:1, vorzugsweise von 1,2:1 bis 0,8:1 eingestellt wird.

Gegenstand der Erfindung ist weiterhin die Verwendung der Beschichtungssysteme zur Lackierung von Substraten wie z.B. Kunststoff, Metall, Hoiz, Textilien, Leder oder Folien sowie von bereits beschichteten Substraten.

Verbindungen gemäß a) werden hergestellt aus (Meth)Acryloylgruppen aufweisenden Alkoholen und Di- oder Polyisocyanaten. Das erfindungsgemäße Estergruppen aufweisende Diol kann dabei sowohl Bestandteil der (Meth)Acryloylgruppen aufweisenden Alkohole, Bestandteil der Polyisocyanate als auch weiterer Bestandteil sein. Herstellverfahren für Urethan(meth)-acrylate sind grundsätzlich bekannt und beschrieben z.B. in der DE-A-1 644 798, DE-A-2 115 373 oder DE-A-2 737 406. Für die erfindungsgemäßen, freie Isocyanatgruppen aufweisenden Urethanmethacrylate beträgt das Mol-Verhältnis von NCO-Gruppen der Di- oder Polyisocyanate zu OH-Gruppen der (Meth)Acryloylgruppen aufweisenden Alkohole und gegebenfalls der OH-Gruppen des Estergruppen aufweisenden Diols von 1:0,2 bis 1:0,8, vorzugsweise von 1:0,3 bis 1:0,6. Es ist auch möglich, eine Mischung aus einem Urethan(meth)acrylat, welches keine freien NCO-Gruppen enthält, mit einem freie Isocyanatgruppen aufweisenden Urethan(meth)acrylat zu verwenden, solange diese Mischung dem oben genannten Verhältnis von NCO-Gruppen zu OH-Gruppen ihrer Bausteine entspricht.

Unter (Meth) Acryloylgruppen aufweisenden Alkoholen sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2- oder 3-Hydroxypropyl oder 2-, 3- oder 4-Hydroxybutyl-(meth)acrylat als auch beliebige Gemische aus derartigen Verbindungen. Außerdem kommen auch einwertige (Meth)-Acryloylgruppen aufweisende Alkohole oder im wesentlichen aus derartigen Alkoholen bestehende Umsetzungsprodukte in Betracht, die durch Veresterung von n-wertigen Alkoholen mit (Meth)Acrylsäure erhalten werden, wobei als Alkohole auch Gemische von unterschiedlichen Alkoholen eingesetzt werden können, so dass n für eine ganze oder im statistischen Mittel gebrochene Zahl von größer 2 bis 4, vorzugsweise 3 steht, und wobei pro Mol der genannten Alkohole von (n-0,6) bis (n-2,2), bevorzugt von (n-0,8) bis (n-1,2), besonders bevorzugt von (n-1) Mol (Meth) Acrylsäure eingesetzt werden. Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth) Acrylsäure im genannten Molverhältnis.

Diese Verbindungen weisen ein Molekulargewicht von 116 bis 1000, vorzugsweise von 116 bis 750 und besonders bevorzugt von 116 bis 158 auf.

Weiterhin sind die Umsetzungsprodukte dieser einwertigen (Meth)Acryloylgruppen haltigen Alkohole mit ε-Caprolacton einsetzbar. Diese Produkte enthalten dann das erfindungsgemäße Estergruppen aufweisende Diol. Bevorzugt werden dabei die Umsetzungsprodukte von Hydroxyalkyl(meth)acrylaten wie beispielsweise 2-Hydroxyethyl-, 2- oder 3-Hydroxypropyl oder 2-, 3- oder 4-Hydroxybutyl-(meth)acrylat mit ε-Caprolacton. Solche Produkte sind beispielsweise erhältlich als Tone® Monomer 100 von der Fa. Union Carbide.

Diese Verbindungen weisen ein Molekulargewicht von 230 bis 3000, vorzugsweise von 230 bis 1206 und besonders bevorzugt von 344 bis 572 auf.

Als Di- oder Polyisocyanate sind grundsätzlich (cyclo)aliphatische, araliphatische und aromatische Verbindungen geeignet, wobei (cyclo)aliphatische Verbindungen bevorzugt sind, z.B. Butylendiisocyanat, Hexamethylendiisocyanat (HDI), Isophorondisocyanat (IPDI), Trimethylhexamethylendiisocyanat (= 2,2,4- und/oder 2,4,4-Trimethylhexamethylendiisocyanat), Di(isocyanatocyclohexyl)methan, Isocyanatomethyl-1,8-octandiisocyanat oder deren Derivate mit Urethan-, Isocyanurat-, Allophanat-, Biuret-, Uretdion-, Iminooxadiazindionstruktur und Mischungen derselben.

Bevorzugt sind Urethangruppen aufweisende Polyisocyanate mit Isocyanuratstruktureinheiten auf Basis von Diisocyanaten und Estergruppen aufweisenden Diolen, deren Herstellung z.B. in der EP-A-336 205 beschrieben wird.

Diese Produkte enthalten dann das erfindungsgemäße Estergruppen aufweisende Diol. Bevorzugt werden als Ausgangsprodukte 1,6-Diisocyanatohexan und Polyesterdiole des mittleren Molekulargewichts von 176 bis 2000, bevorzugt 350 bis 950, besonders bevorzugt 500 bis 800. Es handelt sich um an sich bekannte Polyesterdiole, die aus Diolen und Dicarbonsäuren aufgebaut sind. Geeignete Diole zur Herstellung der Polyesterdiole sind beispielsweise Dimethylolcyclohexan, Ethandiol, 1,2- und 1,3-Propandiol, 1,2-, 1,3-, 1,4-Butandiol und Neopentylglykol. Bevorzugt sind dessen Gemische mit 1,6-Hexandiol, besonders bevorzugt ist 1,6-Hexandiol als alleinige Diolkomponente. Geeignete Dicarbonsäure sind beispielsweise aromatische Dicarbonsäuren wie Phthalsäure, Isophthalsäure und Terephthalsäure, cycloaliphatische Dicarbonsäuren wie Hexahydrophthalsäure, Tetrahydrophthalsäure sowie deren Anhydride und aliphatische Dicarbonsäuren, die bevorzugt Verwendung fmden, wie Bernsteinsäure, Glutarsäure, Adipinsäure, Korksäure, Azelainsäure und Sebacinsäure sowie deren Anhydride. Es können auch beliebige Gemische der beispielhaft genannten Ausgangsmaterialien umgesetzt werden oder beliebige Gemische der Umsetzungsprodukte eingesetzt werden. Besonders bevorzugt werden jedoch Polyesterdiole aus ε-Caprolacton des genannten Molekulargewichtbereichs eingesetzt, die in an sich bekannter Weise aus einem Diol der oben beispielhaft genannten Art als Startermolekül und ε-Caprolacton hergestellt worden sind. Hier wird vorzugsweise als Startermolekül 1,6-Hexandiol verwendet.

Ganz besonders bevorzugt als Komponente sind ε-Caprolactondiole, die auf 1,6-Hexandiol gestartet sind und die eine sehr enge Oligomerenverteilung aufweisen, was durch Verwendung von Bortrifluorid-Etherat oder organischen Zinnverbindungen als Katalysator bei der Polymerisierung erreicht werden kann. Diese ganz besonders bevorzugten Esterdiole bestehen zu mehr als 50 Gew.-% aus Molekülen in einem Molekulargewichtbereich von 460 bis 802.

Das erfindungsgemäße Estergruppen aufweisende Diol kann auch als weiterer Bestandteil bei der Herstellung der Urethan(meth)acrylate gemäß a) zugegeben werden.

Die Polyesterdiole besitzen ein mittleres Molekulargewicht von 176 bis 2000, bevorzugt 350 bis 950, besonders bevorzugt 500 bis 800. Es handelt sich um an sich bekannte Polyesterdiole, die aus Diolen und Dicarbonsäuren aufgebaut sind. Geeignete Diole zur Herstellung der Polyesterdiole sind beispielsweise Dimethylolcyclohexan, Ethandiol, 1,2- und 1,3-Propandiol, 1,2-, 1,3-, 1,4-Butandiol und Neopentylglykol. Bevorzugt sind dessen Gemische mit 1,6-Hexandiol, besonders bevorzugt ist 1,6-Hexandiol als ausschließliche Diolkomponente. Geeignete Dicarbonsäuren sind beispielsweise aromatische Dicarbonsäuren wie Phthalsäure, Isophthalsäure und Terephthalsäure, cycloaliphatische Dicarbonsäuren wie Hexahydrophthalsäure, Tetrahydrophthalsäure sowie deren Anhydride und aliphatische Dicarbonsäuren, die bevorzugt Verwendung finden, wie Bernsteinsäure, Glutarsäure, Adipinsäure, Korksäure, Azelainsäure und Sebacinsäure sowie deren Anhydride, insbesondere bevorzugt wird Adipinsäure. Es können auch beliebige Gemische der beispielhaft genannten Ausgangsmaterialien umgesetzt werden oder beliebige Gemische der Umsetzungsprodukte eingesetzt werden. Besonders bevorzugt werden jedoch Polyesterdiole aus ε-Caprolacton des genannten Molekulargewichtbereichs eingesetzt, die in an sich bekannter Weise aus einem Diol der oben beispielhaft genannten Art als Startermolekül und ε-Caprolacton hergestellt worden sind. Hier wird vorzugsweise als Startermolekül 1,6-Hexandiol venvendet.

Ganz besonders bevorzugt als Komponente sind ε-Caprolactondiole, die auf 1,6-Hexandiol gestartet sind und die eine sehr enge Oligomerenverteilung aufweisen. Dies kann z.B. durch Einsatz von Bortrifluorid-Etherat oder organischen Zinnverbindungen als Katalysator bei der Polymerisierung erreicht werden. Diese ganz besonders bevorzugten Esterdiole bestehen zu mehr als 50 Gew.-% aus Molekülen in einem Molekulargewichtbereich von 460 bis 802.

Die Additionsreaktion des isocyanathaltigen Bestandteils mit dem alkoholhaltigen Bestandteil zum Urethan(meth)acrylat gemäß a) kann in an sich bekannter Weise mittels geeigneter Katalysatoren wie beispielsweise Zinnoctoat, Dibutylzinndilaurat oder tertiären Aminen beschleunigt werden.

Das resultierende, freie NCO-Gruppen aufweisende Urethan(meth)acrylat muss gegen vorzeitige Polymerisation stabilisiert werden, durch Zugabe geeigneter Inhibitoren und Antioxidantien wie beispielsweise Phenole, Hydrochinone, gegebenenfalls auch Chinonen wie z.B. 2.5-Di-tert.-Butylchinon.

Diese Inhibitoren werden in Mengen von jeweils 0,001 bis 0,3 Gew.-% während oder im Anschluss an die Herstellung zugegeben.

Die Produkte können in, im Sinne der Herstellung und späteren Verwendung, inerten Lösemitteln hergestellt werden.

Unter Punkt b) aufgeführte weitere Polyisocyanate sind bevorzugt Polyisocyanate auf Basis von Butylendiisocyanat, Hexamethylendiisocyanat (HDI), Isophorondiisocyanat (IPDI), Trimethylhexamethylendiisocyanat (= 2,2,4- und/oder 2,4,4-Trimethylhexamethylendiisocyanat), Neopentyldiisocyanat, Di(isocyanatocyclohexyl)methan oder 4-Isocyanatomethyl-1,8-octandiisocyanat, die Urethan-, Isocyanurat-, Allophanat-, Biuret-, Uretdion-, Iminooxadiazindionstruktureinheiten oder Mischungen derselben enthalten.

UV-Initiatoren entsprechend Punkt c) können sein 2-Hydroxyphenylketone wie z.B. 1-Hydroxycyclohexyl-phenyl-keton, Benzilketale wie z.B. Benzildimethylketal, Acylphospinoxide wie z.B. Bis-(2,4,6-trimethylbenzoyl)-phenylphosphinoxid, Diacylphosphinoxide, Benzophenon und dessen Derivate bzw. Mischungen aus den verschiedenen UV-Initiatortypen.

Mit Isocyanaten reaktive Verbindungen entsprechend Punkt d) sind Polyole. Diese können durch Veresterung von Di- oder Triolen mit Dicarbonsäuren erhalten werden. Desweiteren sind geeignet hydroxyfunktionelle Copolymere, hergestellt im wesentlichen aus (Meth)Acrylsäureestern, Hydroxyalkyl(meth)acrylsäureestern und gegebenenfalls Styrol und/oder anderen Monomeren wie z.B. Acrylnitril. Weitere Polyole sind auch Polyetherpolyole, wie sie durch Alkoxylierung von Di- oder Polyolen erhalten werden. Als weitere mit Isocyanaten reaktive Verbindungen kommen sterisch gehinderte Amine, wie sie durch Addition von Maleinsäureester an aliphatische, primäre Diamine entstehen, in Betracht.

Es ist auch möglich, dass die mit Isocyanaten reaktiven Verbindungen zusätzlich ethylenisch ungesättigte Gruppen enthalten, z.B. Ester der (Meth)acrylsäure. Solche Verbindungen werden beispielsweise hergestellt, indem hydroxyfunktionelle Copolymere wie Polyacrylate unter Verwendung von Epoxid tragenden Monomeren hergestellt werden. Die Epoxidgruppen werden in einem weiteren Schritt mit (Meth)-Acrylsäure umgesetzt.

Zur Erzielung von Wetterstabilität der gehärteten Lackschicht wird vorzugsweise der Komponente II entsprechend der Punkte e) und f) ein UV-Absorber mit einem Absorptionsbereich bis max. 390 nm und ein HALS-Stabilisator zugegeben werden. Geeignete UV-Absorber sind vom Triphenyltriazintyp, z.B. Tinuvin® 400 (Ciba) oder vom Typ der Oxalsäuredianilide, z.B. Sanduvor® 3206 (Clariant). Die UV-Absorber werden vorzugsweise in Mengen von jeweils 0,5 bis 3,5 % bezogen auf festes Bindemittel zugegeben. Geeignete HALS-Stabilisatoren sind die handelsüblichen Typen wie z.B. Tinuvin® 292 oder Tinuvin® 123 (Ciba) oder Sanduvor® 3058 (Clariant). Diese HALS-Stabilisatoren werden bevorzugt in Mengen von 0,5 bis 2,5 % bezogen auf festes Bindemittel zugegeben.

Als Lackadditive gemäß g) seien beispielhaft genannt:
Entlüftungsmittel wie Polyacrylate und Verlaufsmittel wie Polysiloxane.

Geeignete Lösemittel sind Lösemittel, die gegenüber Isocyanatgruppen und C=C-Doppelbindungen inert sind. z.B. Ester, Ketone, Ether, Etherester, Alkane, oder aromatische Lösemittel wie Xyole oder Toluol.

Werden alle Bestandteile des erfindungsgemäßen Beschichtungssystems als eine Komponente formuliert weist das System ein pot-life auf. Daher ist eine bevorzugte Formulierungsform ein zweikomponentiges System, wobei Komponente I die Bestandteile a) und b) enthält, die Komponente II die Bestandteile c) und d) gegebenenfalls alle Bestandteile von e) bis h). Die jeweiligen Komponenten sind dann analog der Lagerfähigkeit der Bestandteile lagerstabil. Beide Komponenten werden vor der Applikation im angegebenen Verhältnis gemischt oder über sogenannte Zweikomponentenanlagen appliziert.

Das erfindungsgemäße Beschichtungssystem kann mit allen üblichen Applikationsmethoden bevorzugt über Spritz-, Gieß- oder Walzapplikation aufgetragen werden.

Die Aushärtung wird wie folgt erreicht:
Schritt 1: Durch Ablüftung gegebenenfalls zugegebener Lösemittel. Dies erfolgt bei Raumtemperatur oder erhöhter Temperatur, vorzugsweise bis 80°C.
Schritt 2: Durch UV-Härtung, geeignet sind handelsübliche Quecksilber-Hoch- bzw. Mitteldruckstrahler, diese Strahler können durch andere Elemente dotiert sein und weisen bevorzugt eine Leistung von 80 bis 240 W/cm Lampenlänge auf.
Schritt 3: Durch Vernetzung der NCO-haltigen Bestandteile mit den mit NCO-haltigen Bestandteilen reaktiven Bestandteilen. Dies kann bei Raumtemperatur oder erhöhter Temperatur, vorteilhaft unter 150°C erfolgen.

Eine Variante des Aushärtungsverfahren besteht darin, die Reaktion der NCO-haltigen Bestandteile teilweise während der UV-Härtung durch erhöhte Temperatur ablaufen zu lassen.

Die erfindungsgemäßen Beschichtungssysteme eignen sich zur Beschichtung und vorzugsweise zur Lackierung von beliebigen Substraten wie Textilien, Leder, Holz, Metall, Kunststoffen, Folien etc. Auch bereits beschichtete und/oder lackierte Systeme können mit den erfindungsgemäßen Systemen beschichtet und/oder lackiert werden.

### Beispiele:

### Urethanacrylat A:

Von Desmodur® VP LS 2010/1 (Versuchsprodukt Bayer AG, Leverkusen, im wesentlichen HDI-Isocyanurate enthaltendes und mit einem Polyester elastifiziertes Polyisocyanat, NCO-Gehalt: 11 Gew.-%, Viskosität 4800 bis 7200 mPa.s bei 23°C) werden 382 g in 126,6 g n-Butylacetat gelöst. Dazu werden 0,25 g Dibutylzinndilaurat und 1,0 g 2,6-Di-tert.-butyl-4-methyl-phenol gegeben. Unter Durchleiten von Luft und Rühren wird die Lösung auf 60°C erwärmt. Die Heizquelle wird entfernt und es werden erst 117 g 2-Hydroxypropylacrylat derart zugetropft, dass die Temperatur zwischen 55 und 65°C liegt. Im Anschluß wird bei 60°C weiter umgesetzt, bis der NCO-Gehalt unter 0,65 % liegt. Danach werden 7,3 g 2-Ethyl-1,3-hexandiol zugetropft. Anschließend wird bei 60°C umgesetzt, bis der NCO-Gehalt der Lösung kleiner 0,10 Gew.-% beträgt.

### Urethanacrylat B:

Von Desmodur® N 3600 (Handelsprodukt Bayer AG, Leverkusen, im wesentlichen HDI-Isocyanurate enthaltendes Polyisocyanat, NCO-Gehalt: 23,4 Gew.-%, Viskosität 1200 mPa.s bei 23°C) werden 920,0 g in 394,5 g n-Butylacetat gelöst. Dazu werden 0,8 g Dibutylzinndilaurat und 1,6 g 2,6-Di-tert.-butyl-4-methyl-phenol gegeben. Unter Durchleiten von Luft und Rühren wird die Lösung auf 60°C erwärmt. Die Heizquelle wird entfernt und es werden erst 435,0 g 2-Hydroxyethylacrylat derart zugetropft, dass die Temperatur zwischen 55 und 65°C liegt. Im Anschluß wird bei 60°C weiter umgesetzt, bis der NCO-Gehalt unter 3,0 % liegt. Danach werden 223,2 g eines Polyesterpolyols aus Hexandiol und Adipinsäure (OH-Zahl 314, Äquivalentgewicht 178,5 g) zugetropft. Anschließend wird bei 60°C umgesetzt, bis der NCO-Gehalt der Lösung kleiner 0,10 Gew.-% beträgt.

### Urethanacrylat C:

Von Desmodur® N 3600 (Handelsprodukt Bayer AG, Leverkusen, im wesentlichen HDI-Isocyanurate enthaltendes Polyisocyanat, NCO-Gehalt: 23,4 Gew.-%, Viskositäte 1200 mPa.s bei 23°C) werden 220,8 g in 202,6 g n-Butylacetat gelöst. Dazu werden 0,4 g Dibutylzinndilaurat und 0,8 g 2,6-Di-tert.-butyl-4-methyl-phenol gegeben. Unter Durchleiten von Luft und Rühren wird die Lösung auf 60°C erwärmt. Die Heizquelle wird entfernt und es werden erst 574,8 g des Umsetzungsprodukts 2-Hydroxyethylacrylat mit ε-Caprolacton (im Molverhältnis 1:4) derart zugetropft, dass die Temperatur zwischen 55 und 65°C liegt. Im Anschluss wird bei 60°C weiter umgesetzt, bis der NCO-Gehalt unter 1,0 % liegt. Danach werden 14,6 g 2-Ethyl-1,3-hexandiol zugetropft. Anschließend wird bei 60°C umgesetzt, bis der NCO-Gehalt der Lösung kleiner 0,10 Gew.-% beträgt.

### Urethanacrylat D:

Von Desmodur® N 3600 (Handelsprodukt Bayer AG, Leverkusen, im wesentlichen HDI-Isocyanurate enthaltendes Polyisocyanat, NCO-Gehalt: 23,4 Gew.-%, Viskosität 1200 mPa.s bei 23°C) werden 397,4 g in 201,8 g n-Butylacetat gelöst. Dazu werden 0,4 g Dibutylzinndilaurat und 0,8 g 2,6-Di-tert.-butyl-4-methyl-phenol gegeben. Unter Durchleiten von Luft und Rühren wird die Lösung auf 60°C erwärmt. Die Heizquelle wird entfernt und es werden erst 383,4 g des Umsetzungsprodukts von 2-Hydroxyethylacrylat mit ε-Caprolacton (im Molverhältnis 1:0,85) derart zugetropft, dass die Temperatur zwischen 55 und 65°C liegt. Im Anschluß wird bei 60°C weiter umgesetzt, bis der NCO-Gehalt unter 2,0 % liegt. Danach werden 26,3 g 2-Ethyl-1,3-hexandiol zugetropft. Anschließend wird bei 60°C umgesetzt, bis der NCO-Gehalt der Lösung kleiner 0,10 Gew.-% beträgt.

### Urethanacrylat E:

Es wurden 661,9 g des mit 2 mol Acrylsäure veresterten Trimethylolpropan gestarten Ethylenoxid-Polyethers (12 mol Ethylenoxid pro mol Trimethylolpropan) und 164,4 g eines Polyesterpolyols aus Hexandiol und Adipinsäure (OH-Zahl 314, Äquivalentgewicht 178,5 g), 1,0 g 2,6-Di-tert.-butyl-4-methyl-phenol und 1,0 g Zinnoctoat vorgelegt. Bei 50 bis 60°C werden 148,8 g Desmodur® T80 (Toluylendiisocyanat, Handelsprodukt Bayer AG, Leverkusen) zudosiert. Nach weiteren 5 h werden 31,6 g Isophorondiisocyanat zudosiert. Es wird weitere 5 h bei 60°C, dann werden 74,0 g des mit 2 mol Acrylsäure veresterten Trimethylolpropan gestarten Ethylenoxid-Polyethers (12 mol Ethylenoxid pro mol Trimethylolpropan) zugefügt. Anschließend wird bei 60°C umgesetzt, bis der NCO-Gehalt der Lösung kleiner 0,10 Gew.-% beträgt.

### NCO-Gruppen-haltiges Urethanacrylat F:

Von Desmodur® N 3600 (Handelsprodukt Bayer AG, Leverkusen, im wesentlichen HDI-Isocyanurate enthaltendes Polyisocyanat, NCO-Gehalt: 23,4 Gew.-%, Viskosität 1200 mPa.s bei 23°C) werden 552,0 g in 167 g n-Butylacetat gelöst. Dazu werden 1,6 g 2,6-Di-tert.-butyl-4-methyl-phenol gegeben. Unter Durchleiten von Luft und Rühren wird die Lösung auf 60°C erwärmt. Die Heizquelle wird entfernt und es werden 116,0 g 2-Hydroxyethylacrylat derart zugetropft, dass die Temperatur zwischen 55 und 65°C liegt. Im Anschluss wird bei 60°C weiter umgesetzt, bis der NCO-Gehalt unter 10,4 % liegt.

### NCO-Gruppen-haltiges Urethanacrylat G:

Von Desmodur® VP LS 2010/1 (Versuchsprodukt Bayer AG, Leverkusen, im wesentlichen HDI-Isocyanurate enthaltendes und mit einem Polyester elastifiziertes Polyisocyanat, NCO-Gehalt: 11 Gew.-%, Viskosität 4800 bis 7200 mPa.s bei 23°C) werden 460,8 g in 125 g n-Butylacetat gelöst. Dazu werden 0,5 g 2,6-Di-tert.-butyl-4-methyl-phenol gegeben. Unter Durchleiten von Luft und Rühren wird die Lösung auf 60°C erwärmt. Die Heizquelle wird entfernt und es werden 39,2 g 2-Hydroxyethylacrylat derart zugetropft, dass die Temperatur zwischen 55 und 65°C liegt. Im Anschluss wird bei 60°C weiter umgesetzt, bis der NCO-Gehalt unter 6,4 % liegt.

### Formulierung der Lacke:

Es wurden folgende erfindungsgemäße Beschichtungssysteme formuliert: Bindemittelgehalt 55 %, Auslaufzeit DIN-4-Becher (4 mm-Düse DIN 53 211) ca. 20 s.

| *Beispiel Nr.* | *Urethanacrylat Ziffer* / *Gew. Tle.* | *NCO-Gruppen haltiges Urethanacrylat Ziffer* / *Gew. Tle.* | *Polyol: Desmophen® A 575, 75%ig Butylacetat Gew. Tle.* | *Photoinitiator Irgacur® 184 50%ig Butylacelat Gew. Tle* | *Additive und Lösungsmittel* |
|---|---|---|---|---|---|
| 1 | A / 38,2 | F / 12,7 | 19,0 | 1,5 | 28,8¹⁾ |
| 2 | B / 38,2 | F / 12,7 | 19,0 | 1,5 | 28,8¹⁾ |
| 3 | C / 38,2 | F / 12,7 | 19,0 | 1,5 | 28,8¹⁾ |
| 4 | D / 38,2 | F / 12,7 | 19,0 | 1,5 | 28,8¹⁾ |
| 5 | A / 43,2 | G / 14,4 | 11,9 | 1,3 | 29,3²⁾ |
| 6 | E / 38,2 | F / 12,7 | 19,0 | 1,5 | 28,8¹⁾ |

| | | | | | |
|---|---|---|---|---|---|
| ¹⁾ davon [Gew.-Tle.]: 2-Methoxypropylacetat 18,9, Solfesso® 100 6,4, Baysilone® Lackadditiv OL 17 (Fa. Bayer AG), 10-%ig in Butylacetat 0,2, Modaflow® (Fa. Montsanto), 10-%ig in Butylacetat 0,2, Sunduvor® 3206 (Fa. Clariant) 1,7, Sanduvor® 3085 (Fa. Clariant) 0,7, Byk® 306 (Fa. Byk-Chemie) 0,7. | | | | | |
| 2) davon [Gew.-Tle.]: 2-Methoxypropylacetat 19,4, Solfesso® 100 6,4, Baysilone® Lackadditiv OL 17 (Fa. Bayer AG), 10-%ig in Butylacetat 0,2, Modaflow® (Fa. Montsanto), 10-%ig in Butylacetat 0,2, Sunduvor® 3206 (Fa. Clariant) 1,7, Sanduvor® 3085 (Fa. Ciariant) 0,7, Byk® 306 (Fa. Byk-Chemie) 0,7. | | | | | |

Als Vergleich wird Beispiel 2 aus der DE-A-19 800 528 nachgestellt.

Die formulierten Lacke werden unmittelbar nach Herstellung mittels Luftdrucksprüh-Applikation (Düse 1,4 mm Durchmesser, Spritzdruck 2,3 bar) auf unbehandelte Polyurethan-Integralschaum-Platten (Bayflex® MP 10 000, 5 mm, Fa. Bayer AG) aufgebracht (resultierende Schichtdicke ca. 40 - 50 µm). Die Platten werden anschließend 10 min bei 60°C vorgetrocknet, anschließend werden sie 2 mal unter einem Quecksilberhochdruckstrahler (80 W/cm) bei einer Bandgeschwindigkeit von 2 m/min herbewegt. Alle resultierenden Beschichtungen sind trocken und gut handhabbar. Es folgt als letzter Schritt noch eine Nachbehandlung von 16 h bei 60°C.

Im Anschluss wurden die Lacke abgeprüft. Es ergab sich in jedem Fall eine Chemikalienfestigkeit (Lösungsmittel, verd. Säure und Lauge), die dem Niveau einer elastischen 2 Komponenten Polyurethan Lackierung des Stands der Technik entspricht. Zur Überprüfung der Elasitizität wurde wie folgt verfahren: Die Platten wurden um einen Dorn von 2,6 cm Durchmesser um 180° gebogen. Es wurde überprüft, ob die Lackierung intakt bleibt. Bei positivem Ergebnis wurden Platte und Dorn in 10°C Schritten abgekühlt, jeweils 1 h bei der entsprechenden Temperatur gelagert und der Biegetest wiederholt. Derart wird solange verfahren, bis die Lackierung reißt.

| Beispiel | 1 | 2 | 3 | 4 | 5 | 6 |
|---|---|---|---|---|---|---|
| Tiefste Temp., bei der der Lack noch unbeschädigt ist | -10°C | 10°C | -20°C | 10°C | -20°C | 0°C |
| Temperatur, bei der der Lack reißt | -20°C | 0°C | -30°C | 0°C | -30°C | -10°C |

Der Vergleich Beispiel 2 aus der DE-A-19 800 528 reißt bereits bei der ersten Prüfung bei 20°C.

## Patentansprüche

1. Beschichtungssysteme aus:
a) einem Urethan(meth)acrylat, das (Meth) Acryloylgruppen und freie Isocyanatgruppen aufweist,
b) gegebenenfalls einem weiteren Polyisocyanat,
c) einem, die radikalische Polymerisation initiierenden UV-Initiator,
d) einer oder mehreren mit Isocyanaten reaktiven Verbindung,
**dadurch gekennzeichnet, dass** das Urethan(meth)acrylat ein Estergruppen aufweisendes Diol mit einem mittleren Molekulargewicht von 176 bis 2000 in einer Menge von 1 bis 65 Gew.-% bezogen auf die Menge an anderen Bestandteilen des Urethan(meth)acrylat als Bestandteil enthält.

2. Isocyanathaltige Urethan(meth)acrylate gemäß Anspruch 1, hergestellt aus (Meth)acryloyl-gruppen aufweisenden einwertigen Alkoholen und mehrwertigen Isocyanaten, **dadurch gekennzeichnet, dass** das Verhältnis von NCO-Gruppen zu OH-Gruppen von 1 Val zu 0,2 Val bis 1 Val zu 0,8 Val beträgt.

3. Beschichtungssysteme gemäß Anspruch 1, **dadurch gekennzeichnet, dass** die mit Isocyanat reaktive Verbindung ein Polyol ist.

4. Beschichtungssystem gemäß Anspruch 1, **dadurch gekennzeichnet, dass** die mit Isocyanat reaktive Verbindung ethylenisch ungesättigte Gruppen enthält.

5. Beschichtungssystem gemäß Anspruch 1, **dadurch gekennzeichnet, dass** eine weitere mit Isocyanat reaktive Verbindung ein sterisch gehindertes, sekundäres, mehrwertiges Amin ist.

6. Beschichtungssystem gemäß Anspruch 1, **dadurch gekennzeichnet, dass** weitere Polyisocyanate enthalten sind.

7. Beschichtungssysteme, gemäß Anspruch 1, **dadurch gekennzeichnet, dass** ein UV-Absorber mit einem Absorptionsbereich bis 390 nm enthalten ist.

8. Beschichtungssystem gemäß Anspruch 1, **dadurch gekennzeichnet, dass** ein HALS-Amin enthalten ist.

9. Verwendung der Beschichtungssysteme gemäß Anspruch 1 zur Beschichtung von Substraten.

10. Verwendung der Beschichtungssysteme gemäß Anspruch 1 zur Beschichtung von Metall, Holz, Textilien und Leder.

11. Verwendung der Beschichtungssysteme gemäß Anspruch 1 zur Beschichtung von Kunststoffen und Folien.

12. Kunststoff und Folie beschichtet mit Beschichtungssystemen gemäß Anspruch 1.

## Claims

1. Coating systems comprising:
a) a urethane (meth)acrylate containing (meth)acryloyl groups and free isocyanate groups,
b) optionally a further polyisocyanate,
c) a UV initiator which initiates free-radical addition polymerization,
d) one or more isocyanate-reactive compounds,
**characterized in that** the urethane (meth)acrylate comprises as constituent a diol containing ester groups and having an average molecular weight of 176 to 2000 in an amount of 1% to 65% by weight, based on the amount of other constituents of the urethane (meth)acrylate.

2. Isocyanate-containing urethane (meth)acrylates according to Claim 1, prepared from monohydric alcohols containing (meth)acryloyl groups and from polyfunctional isocyanates, **characterized in that** the ratio of NCO groups to OH groups is from 1 eq:0.2 eq to 1 eg:0.8 eq.

3. Coating systems according to Claim 1,
**characterized in that** the isocyanate-reactive compound is a polyol.

4. Coating system according to Claim 1, **characterized in that** the isocyanate-reactive compound contains ethylenically unsaturated groups.

5. Coating system according to Claim 1, **characterized in that** a further isocyanate-reactive compound is a sterically hindered, secondary polyfunctional amine.

6. Coating system according to Claim 1, **characterized in that** further polyisocyanates are present.

7. Coating systems, according to Claim 1,
**characterized in that** a UV absorber having an absorption region up to 390 nm is present.

8. Coating system according to Claim 1, **characterized in that** a HALS amine is present.

9. Use of the coating systems according to Claim 1 for coating substrates.

10. Use of the coating systems according to Claim 1 for coating metal, wood, textiles and leather.

11. Use of the coating systems according to Claim 1 for coating plastics and films.

12. Plastic film coated with coating systems according to Claim 1.

## Revendications

1. Systèmes de revêtement consistant en :
a) un uréthanne-(méth)acrylate contenant des groupes (méth)acryloyle et des groupes isocyanate libres,
b) le cas échéant un autre polyisocyanate,
c) un inducteur pour UV déclenchant la polymérisation radicalaire,
d) un ou plusieurs composés réactifs avec les isocyanates,
**caractérisés en ce que** l'uréthanne-(méth)acrylate contient en tant que constituant un diol à groupes ester de poids moléculaire moyen 176 à 2000 en quantité de 1 à 65 % du poids des autres constituants de l'uréthanne-(méth)acrylate.

2. Uréthanne-(méth)acrylates à groupes isocyanate selon la revendication 1, préparés à partir d'alcools monovalents à groupes (méth)acryloyle d'isocyanates polyvalents, **caractérisés en ce que** le rapport entre les équivalents de groupes NCO et les équivalents de groupes OH va de 1:0,2 à 1:0,8.

3. Systèmes de revêtement selon la revendication 1, **caractérisés en ce que** le composé réactif avec les isocyanates est un polyol.

4. Système de revêtement selon la revendication 1, **caractérisé en ce que** le composé réactif avec les isocyanates contient des groupes à insaturation éthylénique.

5. Système de revêtement selon la revendication 1, **caractérisé en ce qu'**un autre composé réactif avec les isocyanates consiste en une amine secondaire polyvalente objet d'un empêchement stérique.

6. Système de revêtement selon la revendication 1, **caractérisé en ce qu'**il contient d'autres polyisocyanates.

7. Systèmes de revêtement selon la revendication 1, **caractérisés en ce qu'**il contient un absorbeur des UV dont le domaine d'absorption va jusqu'à 390 nm.

8. Système de revêtement selon la revendication 1, **caractérisé en ce qu'**il contient un stabilisant à la lumière consistant en une amine objet d'un empêchement stérique.

9. Utilisation des systèmes de revêtement selon la revendication 1, pour le revêtement de substrats.

10. Utilisation des systèmes de revêtement selon la revendication 1, pour le revêtement de métaux, du bois, des matières textiles et du cuir.

11. Utilisation des systèmes de revêtement selon la revendication 1, pour le revêtement de résines synthétiques et de feuilles.

12. Résines synthétiques et feuilles revêtues à l'aide d'un système de revêtement selon la revendication 1.
